Europäisches Patentamt

European Patent Office

Office européen des brevets

(11) Veröffentlichungsnummer : **0 052 855**
**B1**

# (12) EUROPÄISCHE PATENTSCHRIFT

(45) Veröffentlichungstag der Patentschrift :
28.12.83

(21) Anmeldenummer : 81109745.0

(22) Anmeldetag : 17.11.81

(51) Int. Cl.³ : **C 02 F 3/12, C 02 F 9/00**

(54) **Verfahren und Vorrichtung zur biologischen Reinigung von Abwasser.**

(30) Priorität : 20.11.80 DE 3043820

(43) Veröffentlichungstag der Anmeldung :
02.06.82 Patentblatt 82/22

(45) Bekanntmachung des Hinweises auf die Patenterteilung : 28.12.83 Patentblatt 83/52

(84) Benannte Vertragsstaaten :
AT BE CH DE FR GB IT LI NL

(56) Entgegenhaltungen :
AT-B- 328 983
DE-A- 2 255 725
DE-A- 2 808 054
DE-A- 2 812 813

(73) Patentinhaber : **Linde Aktiengesellschaft**
**Abraham-Lincoln-Strasse 21**
**D-6200 Wiesbaden (DE)**

(72) Erfinder : **Fuchs, Uwe**
**Heiterwanger Strasse 46**
**D-8000 München 70 (DE)**
Erfinder : **Reimann, Hans, Dr.**
**Rudolf-Wilke-Weg 21**
**D-8000 München 71 (DE)**

(74) Vertreter : **Schaefer, Gerhard, Dr.**
**Linde Aktiengesellschaft Zentrale Patentabteilung**
**D-8023 Höllriegelskreuth (DE)**

**0 052 855**

Verfahren und Vorrichtung zur biologischen Reinigung von Abwasser

Die Erfindung betrifft ein Verfahren zur biologischen Reinigung von Abwasser in einer Belebungsanlage mit zwei, getrennte Schlammkreisläufe aufweisenden Stufen, bei dem in der ersten Stufe im wesentlichen die Hauptmenge der organischen Verunreinigungen abgebaut und in der zweiten Stufe der Restabbau durchgeführt wird sowie gegebenenfalls anorganische Stickstoffverbindungen oxidiert werden, sowie eine Vorrichtung zur Durchführung des Verfahrens.

Bei einem solchen Verfahren wird Abwasser zunächst in der ersten Stufe mit belebtem Schlamm unter gleichzeitiger Zuführung von Sauerstoff vermischt. Durch die Tätigkeit der in dem belebten Schlamm enthaltenen aeroben Mikroorganismen werden die organischen Schmutzstoffe des Abwassers zum Teil in Bakteriensubstanz umgewandelt und zum Teil mittels Sauerstoff zu $CO_2$ und Wasser umgesetzt, so daß in der ersten Stufe weitgehend die Kohlenstoffverbindungen oxidiert werden. In der zweiten Stufe erfolgt dann nach dem Überleiten des Abwasser-Belebtschlamm-Gemisches aus der ersten Stufe der Restabbau sowie bei genügender Sauerstoffzufuhr, ausreichender Wassertemperatur und niedriger Schlammbelastung eine Nitrifikation des Abwassers, bei der durch die im Schlamm vorhandenen autotrophen Bakterien Ammonium-Stickstoff hauptsächlich zu Nitrat oxidiert wird. Zur Sauerstoffversorgung der Bakterien ist es bekannt, die Belebungsbecken beider Stufen mit Luft oder einem mehr Vol.% Sauerstoff als Luft enthaltenden Gas zu begasen.

Da bei einem solchen Verfahren in der ersten Stufe bereits die Hauptmenge der organischen Schmutzstoffe abgebaut wird, stellt sich in der zweiten Stufe nur noch eine geringe Belastung ein, weshalb durch den Mangel an Nährstoffen und Schwebstoffen ein nur mäßig bis schlecht absetzbarer Schlamm gebildet wird, der große Nachklärbecken für die zweite Stufe erforderlich macht. Aber auch bei Vorhandensein großer Nachklärbecken kann nicht sicher verhindert werden, daß bei hoher hydraulischer Belastung sowie bei üblicherweise auftretender Schwimmschlammbildung, verursacht durch Denitrifikation in der Nachklärung, ein beträchtlicher Anteil der Schlammpartikel zusammen mit den nur sehr langsam wachsenden nitrifizierenden Bakterien aus dem Nachklärbecken in den Vorfluter abgetrieben wird. Abgesehen von der dadurch bedingten Beeinträchtigung der Qualität des aus der Anlage abgezogenen, gereinigten Abwassers durch Trübstoffe führt dies auch dazu, daß ein Teil der nitrifizierenden Bakterien für den Nitrifikationsvorgang nicht mehr zur Verfügung steht.

Der Erfindung liegt die Aufgabe zugrunde, ein Verfahren der eingangs genannten Art sowie eine Vorrichtung zur Durchführung des Verfahrens so auszugestalten, daß auf einfache und wirtschaftliche Weise die Qualität des gereinigten Abwassers verbessert und gegebenenfalls ein hoher Nitrifikationsgrad erreicht werden kann.

Diese Aufgabe wird erfindungsgemäß dadurch gelöst, daß in das Belebungsbecken der zweiten Stufe Aktivkohle zugegeben wird.

Da in der zweiten Stufe aufgrund des Mangels an kohlenstoffhaltiger Nährstoffe nahezu kein Überschußschlamm produziert wird, wird auch kaum Aktivkohle aus dem System ausgetragen, so daß fast keine neue oder durch aufwendige Maßnahme, wie Regeneration durch nasse oder trockene Oxidation aufbereitete Aktivkohle in das System eingetragen werden muß. Die Vorteile des Aktivkohlezusatzes liegen dabei in einer Erhöhung der Reinigungsleistung und einer Verkürzung der Reinigungszeit. Dies ist darauf zurückzuführen, daß durch den Aktivkohlezusatz die Aufrechterhaltung einer hohen Nitrifikantenkonzentration möglich ist und die Absetzeigenschaften des Schlamms verbessert werden, so daß auch mit einer kleinen, geringe Investitionskosten erfordernden Nachklärung eine gute Trennung zwischen Abwasser und Schlamm zu erreichen ist. Neben dem bei der N-Oxidation katalytischen Effekt bietet die Aktivkohle noch Ansiedlungsflächen für Spezialbiozönosen, wie z. B. nitrifizierende Bakterien, die dann nicht mehr aus dem System ausgetragen werden, so daß anorganische Stickstoffverbindungen schnell und sicher oxidiert werden können. Dazu kommt, daß toxische Abwasserinhaltsstoffe teilweise von der Aktivkohle adsorbiert werden und somit eine Behinderung oder Vergiftung der Nitrifikation durch diese Abwasserinhaltsstoffe weitgehend ausgeschlossen ist.

Von Vorteil ist es dabei, die Aktivkohle in pulverisierter und/oder körniger Form zuzugeben, wobei die Zugabe körniger Aktivkohle eine Korngröße von höchstens 5 mm verwendet wird. Die suspendierten, sehr kleinen Aktivkohleteilchen bilden dann mit der Bakterienmasse einen Verbund, wobei dieser sehr gute biologische Eigenschaften aufweist, da einerseits die Aktivkohleteilchen direkt in der Biomasse eingelagert sind und andererseits die Biomasse sich auf den Aktivkohleteilchen festsetzt, wobei insgesamt eine große Oberfläche zur Ansiedlung der Bakterien zur Verfügung steht. Aufgrund der guten biologischen Eigenschaften ergibt sich auch eine hohe mechanische Belastbarkeit des Verbundes, so daß die sich ausbildenden Agglomerate beispielsweise nicht durch im Belebungsbecken vorhandene Mischaggregate zerschlagen werden können. Außerdem wirkt die in die Biomasse eingebettete Aktivkohle zusätzlich noch als Sauerstoffspeicher und Katalysator, so daß in anoxischen Zonen, wie z. B. in der Nachklärung, noch eine latente Belüftung und Stickstoffoxidation stattfindet und eine Denitrifikation, verbunden mit Schwimmschlammbildung, weitgehend ausgeschlossen wird. Darüber hinaus werden die Bakterienflocken durch diesen Effekt bis ins Flockeninnere mit Sauerstoff versorgt.

Zweckmäßigerweise wird die Zugabe der Aktivkohle in der Weise durchgeführt, daß im Flüssigkeits-Belebtschlamm-Gemisch der zweiten Stufe ein Aktivkohleanteil von 1 bis 20 g/l aufrechterhalten wird. Bei

einem solchen Aktivkohleanteil kann eine ausreichende Belüftung und Durchmischung der Belebtschlammflocken und des Abwassers aufrechterhalten werden, wobei durch einen ausgezeichneten Stoffübergang gegenüber bekannten Verfahren der Energieaufwand zumindest für den Gaseintrag verringert werden kann.

Nach einem weiteren Erfindungsgedanken ist es außerdem vorteilhaft, der Aktivkohle Tonerde und/oder Aluminiumoxid in feinkörniger Form zuzumischen, wobei ein Tonerde- und/oder Aluminiumoxidanteil von 10 bis 50 Vol.% des Aktivkohleanteils eingehalten wird. Damit wird nicht nur neben der Aktivkohle ein weiteres Trägermaterial für die Bakterienmassen zur Verfügung gestellt, sondern auch die gesamte Biomasse spezifisch schwerer gemacht, so daß in der Nachklärung aufgrund guter Absetzeigenschaften eine schnelle Trennung von Abwasser und Schlamm zu erhalten ist.

Um gute Betriebsergebnisse hinsichtlich des spezifischen Sauerstoffverbrauchs zu erhalten, ist es des weiteren zweckmäßig, im Belebungsbecken der zweiten Stufe eine Stickstoffraumbelastung von 0,6 bis 1 kgN/m³ × d aufrechtzuerhalten. Im Bereich dieser Stickstoffraumbelastung ist der spezifische Sauerstoffverbrauch am günstigsten.

Eine Vorrichtung zur Durchführung des Verfahrens umfaßt eine biologische Abwasserreinigungsanlage mit zwei Stufen, bei der den Belebungsbecken der beiden Stufen jeweils ein Nachklärbecken mit Schlammrückführung in die betreffende Stufe nachgeschaltet ist. Erfindungsgemäß ist eine solche Vorrichtung dadurch gekennzeichnet, daß dem Belebungsbecken der zweiten Stufe eine Zugabeeinrichtung für pulverisierte und/oder körnige Aktivkohle sowie gegebenenfalls eine Zugabeeinrichtung für Tonerde und/oder Aluminiumoxid zugeordnet ist.

Bei einer solchen Vorrichtung können die Zugabeeinrichtungen nach Anfahren der Anlage die unvermeidlichen Verluste an Aktivkohle und Tonerde und/oder Aluminiumoxid, die aufgrund der nur geringen Überschußschlammproduktion in der zweiten Stufe selbst sehr gering sind, laufend oder periodisch ausgeglichen werden, so daß der vorstehend genannte Aktivkohleanteil von 1 bis 20 g/l weitgehend konstant gehalten werden kann. Falls eine Zugabeeinrichtung für Tonerde und/oder Aluminiumoxid vorhanden ist, was zur Durchführung des erfindungsgemäßen Verfahrens jedoch nicht unbedingt, sondern nur dann erforderlich ist, wenn eine weitere Verbesserung der Absetzeigenschaften der vorhandenen Biomasse angestrebt wird, sollte diese so eingestellt werden, daß ein Tonerde und/oder Aluminiumoxidanteil von 10 bis 50 Vol.% des Aktivkohleanteils vorhanden ist.

Um bei stark schwankender Stickstofffracht im Belebungsbecken der zweiten Stufe die angegebene Stickstoffraumbelastung einhalten zu können, ist es zweckmäßig, das Belebungsbecken der zweiten Stufe in zwei Kaskadenkammern aufzuteilen, wobei die zweite Kaskadenkammer ein Volumen aufweist, das 20 bis 50 % von dem der ersten Kaskadenkammer beträgt.

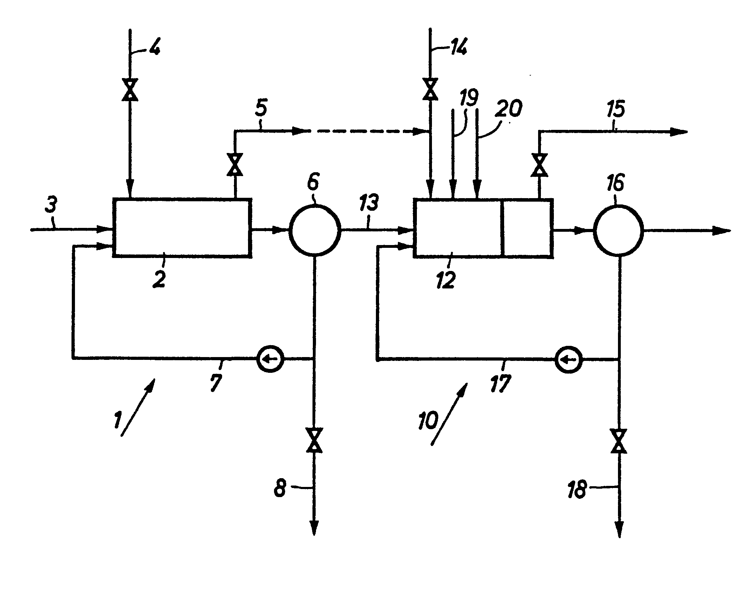

In der Zeichnung ist ein vorteilhaftes Ausführungsbeispiel einer Vorrichtung zur Durchführung des Verfahrens schematisch dargestellt, das nachstehend näher erläutert wird.

In der Figur ist die erste Stufe der Abwasserreinigungsanlage mit 1 und die zweite Stufe mit 10 bezeichnet. Die erste Stufe umfaßt ein Belebungsbecken 2 mit einer Abwasserzuleitung 3, mit einer Gaszuleitung 4 für die Zuleitung von Sauerstoff oder zumindest eines sauerstoffhaltigen Gases und mit einer Abgasleitung 5 sowie ein dem Belebungsbecken 2 nachgeschaltetes Zwischenklärbecken 6 mit einer Schlammrückleitung 7 zur Rückführung von Schlamm in das Belebungsbecken 2 und mit einer Schlammableitung 8 zur Ableitung von Überschußschlamm.

Die zweite Stufe 10 ist im wesentlichen genauso aufgebaut wie die erste Stufe 1 und umfaßt ein in zwei verschieden große Kaskadenkammern unterteiltes Belebungsbecken 12 mit einem an das Zwischenklärbecken 6 der ersten Stufe 1 angeschlossenen Zulauf 13 und ein dem Belebungsbecken 12 nachgeschaltetes Nachklärbecken 16 mit Schlammrückleitung 17 und Schlammableitung 18. Zur Sauerstoffversorgung des Belebungsbeckens 12 ist an dieses ebenso eine Gaszuleitung 14 angeschlossen, die gegebenenfalls mit der Abgasleitung 5 des Belebungsbeckens 2 der ersten Stufe 1 in Verbindung stehen kann. Abgas wird aus dem Belebungsbecken 12 der zweiten Stufe 10 über eine Abgasleitung 15 abgezogen.

Der Gaseintrag in das in den beiden Belebungsbecken 2, 12 vorhandene Flüssigkeitsgemisch kann dabei beispielsweise so erfolgen, daß aus der sich unter den Abdeckungen der Belebungsbecken 2, 12 ausbildenden Gasatmosphäre, die sich aus dem über die Gaszuleitungen 4, 14 zugeführten sauerstoffreichen Gas und dem aus dem Flüssigkeitsgemisch aufsteigenden Gas zusammensetzt, über eine nichtdargestellte Leitung Gas abgezogen und zu einem nahe dem Beckenboden angeordneten Gasverteiler geleitet wird. Über den Gasverteilern sind dann Mischeinrichtungen anzuordnen, die für eine gute Durchmischung von Abwasser, Belebtschlamm und Sauerstoff sorgen. Anstelle von geschlossenen Belebungsbecken 2, 12 können aber auch gegenüber der Atmosphäre offen ausgebildete Belebungsbecken verwendet werden, bei denen dann die Gaszufuhrleitungen 4, 14 und Gasableitungen 5, 15 entfallen und zur Sauerstoffversorgung beispielsweise Oberflächenbelüftungskreisel zum Eintrag von Luftsauerstoff in die in den Belebungsbecken vorhandene Flüssigkeit eingesetzt werden. Auch die Kombination einer Stufe mit einem offenen Belebungsbecken mit einer Stufe mit einem geschlossenen Belebungsbecken ist möglich. Darüber hinaus kann die erste Stufe hintereinandergeschaltete Belebungsbecken aufweisen.

Erfindungsgemäß ist in jedem Fall dem Belebungsbecken 12 der zweiten Stufe 10 eine Zugabeeinrichtung 19 für pulverisierte und/oder körnige Aktivkohle sowie gegebenenfalls eine weitere Zugabevorrichtung 20 für Tonerde und/oder Aluminiumoxid zugeordnet. Die über die Zugabeeinrichtung 19 zugeführte Aktivkohle bildet dabei, wie beschrieben, mit der im Belebungsbecken 12 vorhandenen Biomasse einen Verbund, der sehr gute biologische Eigenschaften und eine hohe mechanische Belastbarkeit aufweist. Die Zugabe von Tonerde und/oder Aluminiumoxid über die Zugabeeinrichtung 20 erfolgt dabei vor allem dann, wenn die durch die Zugabe der Aktivkohle erreichte Verbesserung der Absetzeigenschaften des belebten Schlamms nicht ausreicht.

Da durch den Aktivkohlezusatz und vor allem den Tonerde- und/oder Aluminiumoxidzusatz die Absetzeigenschaften des Schlammes verbessert werden können, kann das Nachklärbecken 16 wesentlich kleiner als das Nachklärbecken 6 der ersten Stufe 1 ausgeführt sein. Da außerdem in der zweiten Stufe 10 kaum Überschußschlamm produziert wird, wird auch kaum Aktivkohle über die Leitung 18 aus dem System ausgetragen, so daß im wesentlichen nur zum Anfahren der gesamten Anlage Aktivkohle über die Zugabeeinrichtung 19 in das Belebungsbecken 12 zugegeben werden muß.

Nachfolgend ist tabellarisch ein Zahlenbeispiel angegeben :

1. Stufe (Reinsauerstoffbegasung)

| | |
|---|---|
| Abwassermenge | $= 15\ m^3/h$ |
| Belebungsbeckenvolumen | $= 200\ m^3$ |
| Belüftungszeit | $= 13\ h$ |
| $BSB_5$-Schlammbelastung | $= 1,1\ kg/kg \cdot d$ |
| Schlammtrockensubstanz | $= 5\ kg/m^3$ |
| $BSB_5$-Zulauf | $= 3\,000\ mg/l$ |
| $BSB_5$-Ablauf | $= 250\ mg/l$ |
| CSB-Zulauf | $= 4\,500\ mg/l$ |
| CSB-Ablauf | $= 700\ mg/l$ |
| TKN-Zulauf | $= 400\ mg\ N/l$ |
| TKN-Ablauf | $= 300\ mg\ N/l$ |

2. Stufe

| | |
|---|---|
| Zulauf aus 1. Stufe | $= 15\ m^3/h$ |
| Belebungsbeckenvolumen | $= 90\ m^3$ |
| Belüftungszeit | $= 6\ h$ |
| Gesamttrockensubstanz | $= 12\ kg/m^3$ |
| A-Kohle-Anteil | $= 4\ kg/m^3$ |
| $Al_2O_3$-Anteil | $= 2\ kg/m^3$ |
| $BSB_5$-Schlammbelastung | $= 0,08\ kg/kg \cdot d$ |
| N-Raumbelastung | $= 1,2\ kgN/m^3 \cdot d$ |
| $BSB_5$-Zulauf | $= 250\ mg/l$ |
| $BSB_5$-Ablauf | $= \leqslant 20\ mg/l$ |
| CSB-Zulauf | $= 700\ mg/l$ |
| CSB-Ablauf | $= \leqslant 100\ mg/l$ |
| TKN-Zulauf | $= 300\ mgN/l$ |
| TKN-Ablauf | $= \leqslant 5\ mgN/l$ |
| $NH_4^+$-Zulauf | $= 275\ mgN/l$ |
| $NH_4^+$-Ablauf | $= \leqslant 1\ mgN/l$ |
| spezifischer $O_2$-Verbrauch | $= 2,5\text{-}3,5\ kgO_2/kgN$ |

**Ansprüche**

1. Verfahren zur biologischen Reinigung von Abwasser in einer Belebungsanlage mit zwei, getrennte Schlammkreisläufe aufweisenden Stufen, bei dem in der ersten Stufe im wesentlichen die Hauptmenge der organischen Verunreinigungen abgebaut und in der zweiten Stufe der Restabbau durchgeführt wird sowie gegebenenfalls anorganische Stickstoffverbindungen oxidiert werden, dadurch gekennzeichnet, daß in das Belebungsbecken der zweiten Stufe Aktivkohle zugegeben wird.

2. Verfahren nach Anspruch 1, dadurch gekennzeichnet, daß die Aktivkohle in pulverisierter und/oder körniger Form zugegeben wird, wobei bei Zugabe körniger Aktivkohle eine Korngröße von höchstens 5 mm verwendet wird.

3. Verfahren nach Anspruch 1 oder 2, dadurch gekennzeichnet, daß die Zugabe der Aktivkohle in der Weise durchgeführt wird, daß im Flüssigkeits-Belebtschlamm-Gemisch der zweiten Stufe ein Aktivkohleanteil von 1 bis 20 g/l aufrechterhalten wird.

4. Verfahren nach einem der Ansprüche 1 bis 3, dadurch gekennzeichnet, daß der Aktivkohle Tonerde und/oder Aluminiumoxid in feinkörniger Form zugemischt wird, wobei ein Tonerde- und/oder Aluminiumoxidanteil von 10 bis 50 Vol.% des Aktivkohleanteils eingehalten wird.

5. Verfahren nach einem der Ansprüche 1 bis 4, dadurch gekennzeichnet, daß im Belebungsbecken der zweiten Stufe eine Stickstoffraumbelastung von 0,6 bis 1 kg N pro $m^3 \times d$ aufrechterhalten wird.

6. Vorrichtung zur Durchführung des Verfahrens nach einem der Ansprüche 1 bis 5, mit einer biologischen Abwasserreinigungsanlage mit zwei Stufen, bei der den Belebungsbecken der beiden Stufen jeweils ein Nachklärbecken mit Schlammrückführung in die betreffende Stufe nachgeschaltet ist, dadurch gekennzeichnet, daß dem Belebungsbecken (12) der zweiten Stufe (10) eine Zugabeeinrichtung (19) für pulverisierte und/oder körnige Aktivkohle sowie gegebenenfalls eine Zugabeeinrichtung (20) für Tonerde und/oder Aluminiumoxid zugeordnet ist.

7. Vorrichtung nach Anspruch 6, dadurch gekennzeichnet, daß das Belebungsbecken (12) der zweiten Stufe (10) in zwei Kaskadenkammern aufgeteilt ist, wobei die zweite Kaskadenkammer ein Volumen aufweist, das 20 bis 50 % von dem der ersten Kaskadenkammer beträgt.

## Claims

1. A process for the biological purification of sewage in an activating plant having two stages with separate sludge cycles, in which, in the first stage, essentially the main amount of the organic impurities is decomposed and, in the second stage, the decomposition of the residue is carried out and, if necessary, inorganic nitrogen compounds are oxidized, characterised in that activated carbon is introduced into the activating tank of the second stage.

2. A process according to Claim 1, characterised in that the activated carbon is added in powdered and/or granular form, a granule size of at most 5 mm being used in the addition of granular activated carbon.

3. A process according to Claim 1 or Claim 2, characterised in that the addition of activated carbon is effected in such a way that an activated carbon content of 1 to 20 g/l is maintained in the liquid-activated sludge mixture of the second stage.

4. A process according to one of Claims 1 to 3, characterised in that pure clay and/or aluminium oxide in fine-grained form, are mixed with the activated carbon, a pure clay and/or an aluminium oxide content of 10 to 50 % by volume of the activated carbon component being maintained.

5. A process according to one of Claims 1 to 4, characterised in that a nitrogen space loading of 0.6 to 1 kg N per $m^3 \times d$ is maintained in the activating tank of the second stage.

6. Apparatus for carrying out the process according to one of Claims 1 to 5, comprising a biological sewage purification plant having two stages, in which, after the activating tanks of both stages, a sedimentation tank with sludge recycling into the respective stage is connected in each case, characterised in that the activating tank (12) of the second stage (10) is provided with a feed device (19) for powdered and/or granular activated carbon and, if necessary, a feed device (20) for pure clay and/or aluminium oxide.

7. Apparatus according to Claim 6, characterised in that the activating tank (12) of the second stage (10) is divided into two cascade chambers, the second cascade chamber having a volume which is 20 to 50 % of that of the first cascade chamber.

## Revendications

1. Procédé d'épuration biologique d'eaux usées dans une installation d'activation à deux étages présentant des circuits de boues séparés dans lequel sensiblement la plus grande partie des polluants organiques sont détruits dans le premier étage, le reste étant dirigé vers le deuxième étage, et où également les liaisons azotées minérales sont oxydées, caractérisé en ce que l'on injecte du charbon actif dans les bassins d'activation du deuxième étage.

2. Procédé selon la revendication 1, caractérisé en ce que le charbon actif est injecté sous forme pulvérisée et/ou en grain, et en ce que, en cas d'injection de charbon actif en grain, on utilise une taille de grain d'au moins 5 mm.

3. Procédé selon la revendication 1 ou 2, caractérisé en ce que l'injection de charbon actif est conduite de façon à maintenir dans le mélange liquide de boues activées du deuxième étage une teneur en charbon actif de 1 à 20 g/l.

4. Procédé selon l'une des revendications 1 à 3, caractérisé en ce que de l'alumine (ou terre argileuse) et/ou de l'oxyde d'aluminium sous forme finement pulvérisée sont mélangés au charbon actif et en ce que l'on maintient une teneur en alumine (ou terre argileuse) et/ou en oxyde d'aluminium égale à 10 à 50 % en volume de la teneur en charbon actif.

5. Procédé selon l'une des revendications 1 à 4, caractérisé en ce que l'on maintient, dans les bassins d'activation du deuxième étage, une charge locale azotée de 0,6 à 1 kg N par $m^3 \times d$.

6. Dispositif pour la mise en œuvre du procédé selon l'une des revendications 1 à 5 avec une installation d'épuration biologique d'eau usée à deux étages, dans lequel aux bassins d'activation des deux étages, est relié, en aval de l'étage correspondant un bassin de post-décantation avec retour des boues, caractérisé en ce que le bassin d'activation (12) du deuxième étage (10) est muni d'un dispositif

**0 052 855**

d'apport ou d'injection de charbon actif pulvérisé et/ou en grain ainsi que, le cas échéant, d'un dispositif d'apport (20) pour de l'alumine (ou terre argileuse) et/ou de l'oxyde d'aluminium.

7. Dispositif selon la revendication 6, caractérisé en ce que le bassin d'activation (12) du deuxième étage (10) est divisé en deux chambres en cascade et en ce que la deuxième chambre en cascade présente un volume qui atteint 20 à 50 % du volume de la première chambre en cascade.